# EUROPEAN PATENT APPLICATION

(11) **EP 4 360 460 A1**
(43) Date of publication of application: **01.05.2024**
(21) Application number: 22204070.1
(22) Date of filing: 27.10.2022
(51) Int. Cl.: A22C 25/16

(54) **A MACHINE AND A METHOD FOR REMOVING A DORSAL FIN FROM A FISH**

(71) Applicant: Marel Iceland EHF, 210 Gardabaer (IS)
(72) Inventor: HREINSSON, Ellidi, IS-210 Gardabaer (IS)
(74) Representative: Inspicos P/S

(57) **Abstract**

A machine (1) for removing a dorsal fin of a fish, the machine comprising:
- a conveying system (2) configured to convey a sequence of fish (3) in a downstream direction (4) while each fish of the sequence of fish is oriented with right and left sides of the fish on opposite sides of a vertical centre plane,
- a cutter tool (5), and
- at least one mechanical height control for controlling a height of the cutting tool relative to the conveying system, the mechanical height control comprising a frame (9) carrying at least the first cutting tool and a ski (10) attached to the frame.

To provide a precise removal of the dorsal fin and thereby reduce the loss of valuable meat and ensure bone and fin free meat, the ski is arranged to ride on the dorsal part of the fish while the frame is moving in a hight adjustment plane based on the riding of the ski on the dorsal part of the fish. When the cutting tool reaches the fin to be removed, the frame is movable by a motion control between an upper and a lower position relative to the ski. This movement is based on a signal representing a position of a fish in the sequence of fish relative to the cutting tool.

## Description

### INTRODUCTION

The present invention relates to a machine for cutting the dorsal fin away from a fish e.g., before a filleting process. The invention further relates to a method for removing a dorsal fin from a fish, e.g., of the Ictaluridae or Siluridae species (nominate family of catfishes species), for instance, catfish, e.g., Ictalurus punctatus.

### BACKGROUND

When processing fish, yield is an important parameter since the meat is typically valuable. Unnecessary removal of meat should be prevented while ensuring removal of unwanted parts, typically bone, fins, and fat.

Fish filleting operations typically include removal of the heads and the fish entrails. Subsequently, the fish is split longitudinally and vertically into three pieces, i.e., two sidepieces, referred to herein as *"fillets",* and one intermediate piece referred to herein as *"skeleton".* The skeleton contains the vertebral column.

In the following context, the anatomy of the fish will be referred to as follows.

The dorsal part of the fish is the part extending upwardly from the vertebral column to the upper back of the fish. This part terminates upwardly by what is herein referred to as *"margin of the dorsal part"* of the fish, i.e. the margin of the dorsal part is the upper edge of the fish.

The ventral part of the fish is the part extending downward from the vertebral column and include the abdomen or belly together with the tail part located between the abdomen and the tail. This part terminates downwardly by what is herein referred to as *"margin of the ventral part"* of the fish, i.e., margin of the ventral part is the lower edge of the fish.

The vertical centre plane is a virtual plane introduced for supporting definitions herein. The vertical centre plane is a longitudinally extending vertical plane intersecting through the middle of the vertebral column, centrally between the two fillets.

The skeleton is merely used for industrial purposes, e.g.,, for making fishmeal etc. while the fillets (with or without skin) represent the valuable part of the fish and may be further processed, e.g.,, by smoking.

In general, the process of filleting at least some fish species is widely automated. In existing machines, one or more knife arrangements cut the fish into fillets either by cutting from one end of the fish throughout the fish or by cutting partly from the margin of the ventral part and partly from the margin of the dorsal part of the fish. Most frequently, filleting machines are provided with one or more sets of two adjacent circular rotating knife blades. Obviously, the rotating knife blades perform a plane cut into the fish.

To prevent loss of valuable fish meat, some machines are provided with a set of circular knife blades being arranged to form an angle between the blades. In this way, the blades define a zone with a relatively open gap and a diametrically opposite zone with a relatively narrow gap. In this way, the blades can cut a triangular part out of the fish relatively close to the vertebral column for removing the dorsal fin.

This is efficient for removing the dorsal fin. However, mainly since each blade performs a plane cut, relatively large amounts of the meat, especially in the margin of the ventral part of the fish, is cut off from the fillets and removed with the valueless skeleton.

### SUMMARY

It is an object to improve yield and the quality of fillets. For this and other objects, a machine and a method for filleting fish are provided according to the independent claims. Other objects are to provide a machine which reduces the risk of mechanical breakdowns; reduces filleting process failures e.g.,, by fish parts getting stuck in the machine; lowers the service time and thus to provide a machine being able to function more continuously.

Herein, the term "mechanical height control" means that the height is determined by mechanical interaction between the ski and the fish, e.g.,, the back of the fish. This is different from an electronic solution where light sensors guide an electronic servo system for positioning the cutting tool based on a pure electronic signal.

As opposed hereto, the present disclosure advice a frame which is mechanically moved by interaction with the fish. When the ski rides on the dorsal part of the fish, the frame can move up and down in a plane which herein is referred to as "the adjustment plane" and the frame can thereby move the cutting tool up and down according to the actual shape of a fish.

When the frame moves relative to the ski, the corresponding tool can be lowered to a position where the cutting blades cuts into the fish. Since the position of the cutting tool is controlled continuously by the ski sliding on the dorsal part of the fish both in the lower and upper position of the frame relative to the ski, the cutting depth can be controlled with high precision and a reduced waste of meat can be expected.

Particularly, the fact that the ski keeps sliding on the fish both before and after the cutting tool has engaged the fish increases the precision. This is enabled by the ability of the frame to move relative to the ski and by the ability of the ski to move along the dorsal side of the fish.

Accordingly, due to the specifically claimed mechanical height control, robust, fast, and precise positioning of the cutting tool can be achieved for removal of the dorsal fin with only very little meat-loss, service time, complexity, and at relatively low machine manufacturing costs.

The conveying system may be configured to convey the fish e.g.,, by use of one or more belts, e.g.,, by friction between the fish and the belt(s). In one embodiment, the conveying system comprises at least two conveying belts, e.g.,, endless belts arranged symmetrically on opposite sides of the vertical centre plane. Such belts may have projections or spikes increasing the grip in the fish and thus preventing slipping while they pull the fish past the cutting tool. This may improve the ability to determine the position of the fish, and particularly to determine the point in time when the fish, or particularly the dorsal fin, arrives at the cutting tool.

The cutter tool is generally a tool of the kind known already for cutting fish, and it may particularly include one or more rotating knifes.

The fish may be oriented with the dorsal side facing in an upwards direction. This allows the fin to be removed from a cut performed when the cutting tool is lowered from a high position to a low position relative to gravity. It furthermore allows gravity to move the cutting tool or at least support movement of the cutting tool from the upper to the lower position.

The machine may comprise a sensor arranged upstream the mechanical height control to provide the position of the fish. The sensor may be arranged to detect e.g.,, the position of the dorsal fin, or generally to detect the position of the fish. In one embodiment, the fish is decapitated, and the sensor is arranged to sense where the fish starts, i.e., the transition between the fish head (being removed) and the body of the fish. By use of the time where this position of the fish passes the sensor, and by knowledge about the conveying speed and the distance between the sensor and the cutting tool, the machine can calculate the correct point in time to move the frame from the upper position to the lower position. For this purpose, the machine may comprise a controller.

The controller may be implemented using standard hardware circuits, using software programs and data in conjunction with a suitably programmed digital microprocessor or general-purpose computer, or a cloud computer, and/or using application specific integrated circuitry, and/or using one or more digital signal processors. Software program instructions and data may be stored on a non-transitory, computer-readable storage medium, or in the cloud, and when the instructions are executed by a computer or other suitable processor control, the computer or processor performs the functions associated with those instructions. Accordingly, the disclosure comprises software readable by computer means for carrying out the method of determining the point in time when the frame is moved from the upper to the lower position based on the signal from the sensor.

The machine depends on movement of the frame relative to the conveying system and movement of the frame relative to the ski. These two freedoms to move will be explained further as the first freedom, being the movement of the frame relative to the conveying system, and as the second freedom, being the movement of the frame relative to the ski.

The first and the second freedoms could be provided by linear or rotational bearings providing linear and/or pivotable motions, respectively.

In one embodiment, the first freedom, i.e., movement of the frame relative to the conveying system may be provided by a frame which is hinged to the conveyor system by a first pivot structure which allows pivoting of the frame relative to the conveying system. This movement could be stopped by a mechanical stop defining a lower position of the frame relative to the conveyor system. Herein we refer to this mechanical stop as a first mechanical stop.

The first pivot structure could be implemented by use of one or more standard bearings, e.g.,, roller or needle bearings. The first pivot structure may comprise a pivot point on opposite sides of the vertical centre plane such that the frame is pivotable about an axis extending transverse or perpendicularly to the downstream conveying direction.

The first freedom may be facilitated mainly or entirely by interaction with the fish, i.e., without powered assistance from an actuator.

In this embodiment, the frame may rest on the first mechanical stop when not being raised by the interaction between the ski and the fish. I.e., the frame may pivot by use of the first pivot structure without powered means but essentially by interaction with the fish. When a fish arrives at the ski, the ski is lifted by the fish, and this raises the entire frame. When the frame is moved to from the upper to the lower position relative to the ski, the frame drops down, e.g.,, based on gravity.

In one embodiment, the second freedom, i.e., movement of the frame relative to the ski may be provided by a frame which is hinged to the ski by a second pivot structure which allows pivoting of the frame relative to the ski. This movement may be stopped by a mechanical stop preventing further downwards movement of the frame relative to the ski, herein we refer to this stop as the second mechanical stop.

The second pivot structure could be implemented by use of one or more standard bearings, e.g., roller or needle bearings. The second pivot structure may comprise a pivot point allowing pivoting of the frame about an axis extending transverse or perpendicularly to the downstream conveying direction.

The second mechanical stop may particularly prevent the frame from reaching the first mechanical stop so that the frame is, at all times, raised by the fish, when there is a fish at the cutting tool. This allows the fish to determine the height of the cutting tool during the cutting process, i.e. both in the lower and the upper position of the frame relative to the ski.

An actuator of any kind, e.g.,, a linear actuator, may be arranged to cause the angular displacement moving the frame relative to the ski, e.g.,, an actuator which can be controlled between different positions or an actuator switchable between two end-stops.

At least one of the first and second mechanical stops may be adjustable.

The distance between the upper and lower position of the frame relative to the ski may be controlled based on a fish size signal representing a size of a fish in the sequence of fish.

By means of an example, if the fish is large, the second mechanical stop may be lowered to allow the cutting tool to cut deeper into the fish, and if the fish is small, it may be raised to only allow cutting a small distance into the fish.

The cutter tool may comprise at least two circular blades, e.g.,, a first cutting device arranged on one side of the vertical centre plane and comprising a corresponding blade configured for cutting the fish during rotation of the blade about a first rotation axis and a second cutting device arranged on the opposite side of the vertical centre plane and comprising a corresponding blade configured for cutting the fish during rotation of the blade about a second rotation axis.

The blades may rotate about first and second rotation axes, respectively. These axes may be non-parallel, i.e. the first axis may be non-parallel with the second rotation axis.

The frame may carry both the first and the second cutting device, and the first and second devices may be fixed to each other. Moreover, they may be symmetrically arranged relative to the vertical centre plane.

The first cutting device may have a fixed angle to the second cutting device, and the first cutting device may have a fixed distance to the second cutting device. The fixed angle and/or distance may improve the ability to make precise cutting and particularly improve the repeatability of the cutting. In one embodiment, the angle is fixed but the distance between the first cutting blade and the second cutting blade is adjustable. In that way, the gap can be adjusted while the angle between the blades is maintained.

A blade shield may be arranged to shield a sector of a circumference of the corresponding blade. This may prevent unintended cutting into the fish, and the shield may be moved away from the blade when the frame moves to the lower position relative to the ski. This may be provided by attaching the shield to the ski such that it follows the ski rather than the frame and blades.

The machine may comprise a suction hose with an open end arranged at the first and second cutting devices for receiving the dorsal fin by suction. The suction hose could be attached to the ski such that the blades are moved free of the suction hose when the frame is lowered relative to the ski.

The first and second cutting device could be arranged on positions referred to herein as cutting positions. These positions could be on a line being perpendicular to the conveying direction. A dorsal blade shield forming a slot arranged to receive the dorsal fin could be provided at the cutting position such that the fin is supported during the cutting.

The open end of the suction hose could be formed downstream and directly adjacent the dorsal blade shield such that the fin is received by the suction hose directly from the fin structure after being cut away from the body of the fish.

The mechanical height control may comprise two skies arranged on opposite sides of the vertical centre plane. Both skies may be attached individually to the frame by a bearing structure. They may both be pivotable and the frame may therefore comprise two of said second pivot structures.

A synchronisation structure may be provided for synchronising the movement of the two skies such that they support the frame equally.

The two skies may be on opposite sides of the dorsal blade shield.

In a second aspect, a method is disclosed for removing a dorsal fin of a decapitated fish by use of the machine explained above.

The fish is conveyed with right and left sides of the fish on opposite sides of a vertical centre plane, and the cutter tool is moved in the vertical plane by moving the frame between the upper and the lower position relative to the ski.

The position of front of the fish may be detected, and the movement of the frame may be initiated at the front of the fish.

### BRIEF DESCRIPTION OF THE DRAWING

The accompanying drawings are included to provide a further understanding of embodiments and are incorporated into and a part of this specification. The drawings illustrate embodiments and together with the description explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
- Fig. 1: is a schematic representation of the machine;
- Fig. 2: is a schematic representation of an embodiment of the machine;
- Fig. 3: is detailed representation of the machine;
- Fig. 4: is detailed representation of selected parts the machine;
- Fig. 5: is a specific view detailed representation of the machine seen upstream;

### DETAILED DESCRIPTION

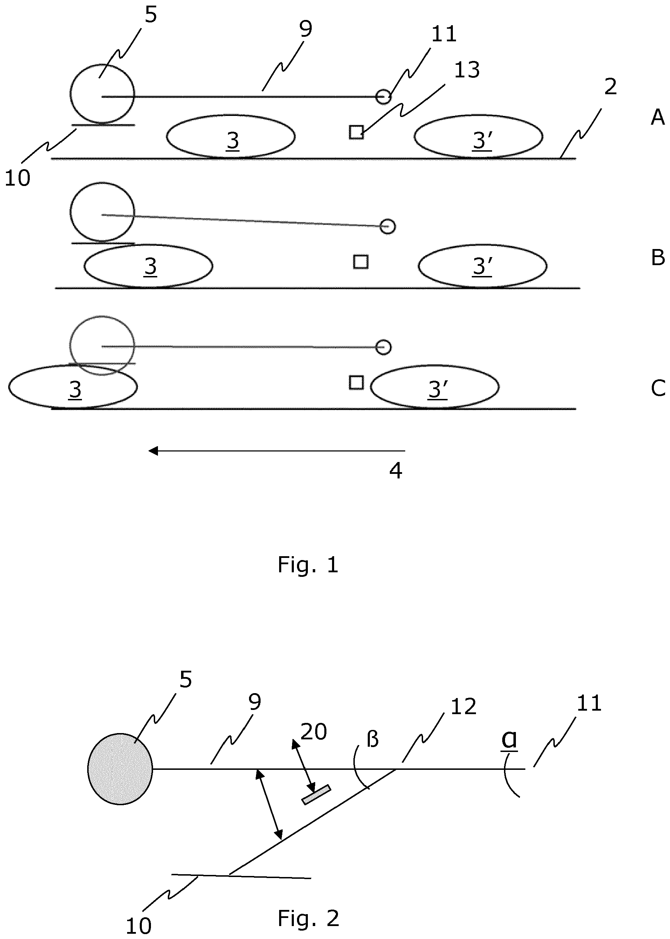

Fig. 1 illustrates schematically the function of the machine 1. The machine is an industrial device for removing a dorsal fin of a fish which is conveyed in a continuous stream on a conveyor 2.

The fish is illustrated by the circles 3, 3'. It could generally be any kind of fish having a dorsal fin, e.g., Salmonidae, or Gadidae, or of the Ictaluridae species, for instance, catfish, e.g., Ictalurus punctatus (channel catfish). The machine is particularly useful for processing the area of the dorsal spike and removing the dorsal fin. The cutter tool 5 is arranged above the conveyance path and movable relative to the path of the fish. The cutter tool 5 illustrated schematically in Fig. 1 and 2 is shown with only one knife. As illustrated in the subsequent Figs., the machine preferably has a cutter tool 5 with two cutting devices 30, 31 arranged symmetrically on opposite sides of the vertical centre plane.

The vertical centre plane is a virtual plane is a virtual plane introduced for defining the machine. The machine may, however, include a saddle or plate on which the fish can ride through the machine.

Each fish is conveyed with a small distance to adjacent fish in the sequence of fish. The fish are conveyed in a direction referred to herein as a downstream direction. This direction is illustrated by the arrow 4. Right and left sides of the fish are on opposite sides of the vertical centre plane.

The machine comprises a mechanical height control which controls the height of the cutting tool relative to the conveying system.

The mechanical height control comprises a frame illustrated in Figs. 1 and 2 by a single line 9. The frame is carrying the cutting tool and it is movable in a vertical plane. Additionally, the frame carries what is referred to herein as a ski. The ski is schematically illustrated by the line 10, and it is configured for sliding movement along the dorsal side, i.e. the back of the fish when the fish is conveyed through the machine.

Accordingly, the ski follows the contour of the fish. Since the ski is attached to the frame, the movement of the ski is transferred to the frame which moves up and down in accordance with the contour of the fish and thereby ensures that the cutting tool also follows the contour of the fish.

The machine comprises a motion control configured to move the frame relative to the ski. The frame is movable between an upper and a lower position relative to the ski and this allows the heigh of the cutting tool relative to the back of the fish to be adjusted. In the upper position, the cutting tool is not touching the fish, and in the lower position, the cutting tool engages into the fish.

The motion control is configured to receive a signal representing a position of a fish in the sequence of fish relative to the first and second cutting devices and to move the frame based on the signal. The signal could be obtained from a sensor placed along the conveyor.

Fig. 1 illustrates the dorsal fin removal procedure in a sequence of three illustrations marked as A, B, and C illustration a sequence of two fish 3, 3'.

In illustration A, the left fish 3 has passed a sensor 13, and continues the movement towards the left. The frame 9 is in a fixed position relative to the ski 10.

In illustration B, the left fish 3 has reached the ski, and the frame is lifted and follows the contour of the fish by the movement of the ski along the dorsal side of the fish. A controller has information related to the position of the sensor 13 and the speed of the fish. Based thereon, the controller calculates the position of the fish. Based on the position of the fish, the motion control moves the frame to the lower position relative to the ski. This is illustrated in illustration C, where the cutting tool 5 extends into the back of the fish.

The sensor 13 is illustrated schematically. In practise, it could e.g.,, be a light sensor, or a mechanical sensor activated by the presence of the fish, and the sensor could be located closer to the cutting tool or further away from the cutting tool. In one embodiment, the sensor is a mechanical sensor located directly adjacent the cutting tool and configured to trigger the motion control mechanically.

The mechanical heigh control may function in different ways, e.g.,, by linear movement of the frame and the ski.

Fig. 2 illustrates further details of a specific embodiment of the mechanical height control. The mechanical height control of this embodiment comprises a frame 9 which forms at least one first pivot structure 11 allowing pivoting of the frame 9 relative to the conveying system.

The movement of the frame is thereby constituted by an angular displacement of the frame and it is indicated in Fig. 2 by a.

The frame further defines a pivot point for the ski. Herein, this is referred to as a second pivot structure 12. The ski 10 is attached to the frame in this pivot point, and the ski is thereby allowed to move relative to the frame. The movement between the upper position and the lower position is therefore constituted by an angular displacement of the ski about the second pivot structure 12. In Fig. 2, this angular movement is illustrated by β.

The angular displacement can be caused by an actuator. In Fig. 2, this is illustrated by an actuator 20, in this embodiment being a linear actuator, arranged to cause the angular displacement. The linear actuator could be a pneumatic cylinder, or a solenoid configured to provide an end-to-end movement between two stops, i.e., without the ability to adjust the position between the end stops. Alternatively, the actuator could be more advanced and allow positioning between the end-stops. Such a more advanced actuator may e.g., be a servo actuator, e.g., a spindle motor etc.

The end stops may be adjustable. This may be achieved using an adjustment pin (not shown) which can be lowered or raised to thereby define the range in which the frame can move relative to the ski. The adjustment pin may e.g., have a screw-threaded portion allowing adjustment of the stop and thereby the distance of the cutting tool into the fish.

The machine may comprise a controller configured to control end stop and thereby the angular displacement based on a fish size signal representing a size of a fish in the sequence of fish. This signal could be keyed in by an operator after having evaluated the fish which is to be processed, or the signal could be provided by a sensor arranged along the conveyor, e.g., by the same sensor which provides the position of the fish relative to the cutting tool.

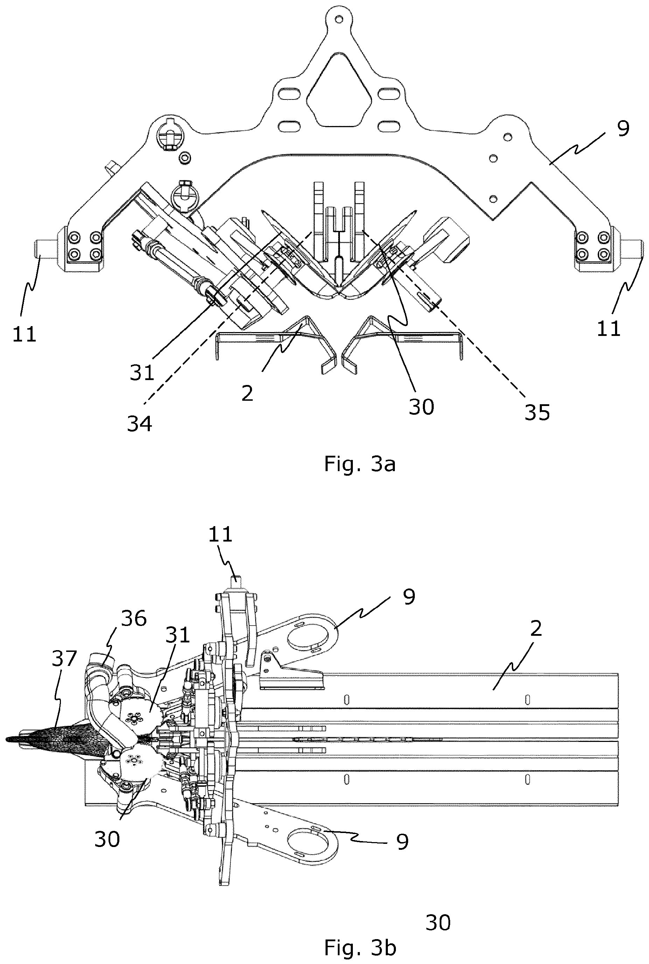

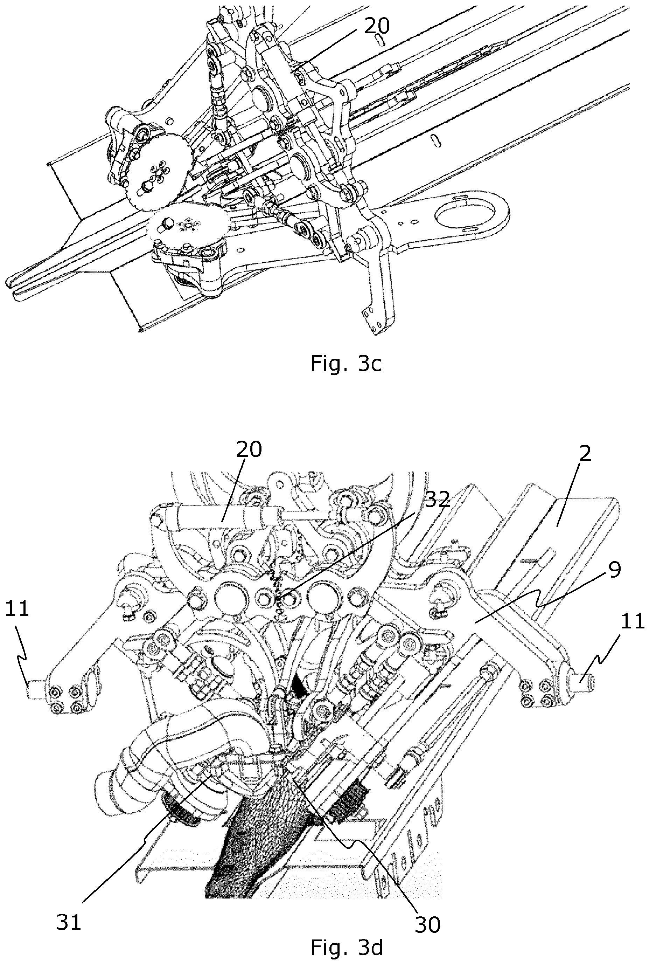

Fig. 3 illustrates a more detailed view of an embodiment. In this embodiment, the conveying system 2 is configured to convey the fish with the dorsal side of the fish facing in an upwards direction. The fish is illustrated in later Figs.

In the embodiment of Fig. 3, the cutting tool is constituted by a first cutting device 30 arranged on one side of the vertical centre plane, and a second cutting device 31 arranged on the opposite side of the vertical centre plane.

Each cutting device comprises a circular saw blade or knife blade configured for cutting the fish during rotation about a rotation axis, 34, 35. The first and second cutting devices are arranged on opposite sides of a cutting position in the vertical centre plane, i.e., they are located on a line being perpendicular to the conveying direction.

The frame 9 carries both the first and the second cutting device 30, 31, and the devices are fixed to each other by a bracket. Accordingly, the mechanical height control is handling the first and second cutting devices as if they were one single unit. The first cutting device has a fixed angle and a fixed distance to the second cutting device.

In an alternative implementation (not shown), each of the first and second cutting devise may have individual mechanical height controls and they may move individually thereby allowing individual depth of each circular blade into the fish.

Fig. 3b illustrates the device when seen from above and including a fish and a suction hose 36 for removing fins which are cut off from the fish body 37.

Fig. 3c illustrates further details of the machine, including the linear actuator 20 for amending the position of the frame 9 relative to the ski 10.

Fig. 3d illustrates a synchronisation structure 32 provided to synchronise movement of two skies of the mechanical height control such that they control the dorsal side of the fish is followed symmetrically on opposite sides of the dorsal fin.

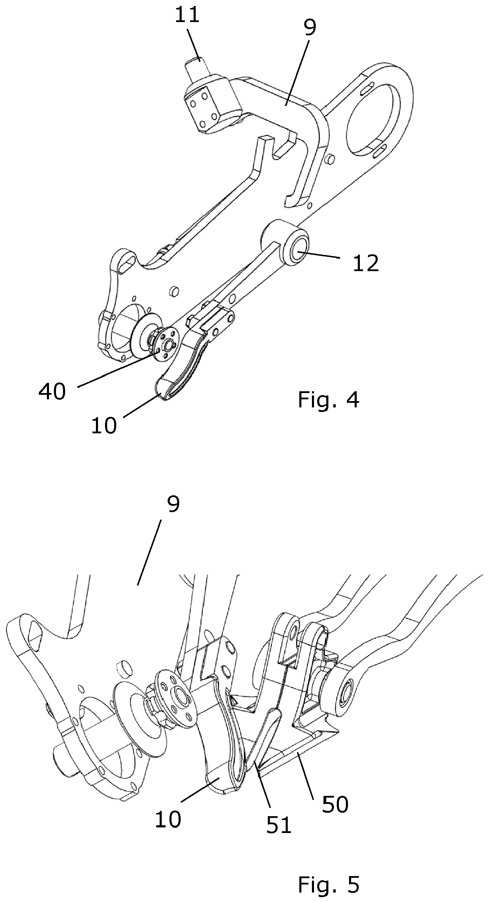

Fig. 4 illustrates selected components including the frame 9, the ski 10, the first pivot structure 11 and the second pivot structure 12. The first cutting device 30 is illustrated without the circular knife. The circular knife is to be attached to the rotating flange 40. When the ski 10 is locked in position relative to the frame, the frame will pivot up and down at the first pivot structure 11 and thereby lift and lower the cutting tool based on the shape of the fish. When the frame is moved relative to the ski by pivoting about the second pivot structure 12, the cutting tool may engage or disengage the fish while the ski continuously follows the dorsal side of the fish. The actuator 20 is not illustrated but acts to cause rotation of the ski 10 about the second pivot structure 12.

Fig. 5 illustrates further details in the form of the blade shield 50 with a slot 51 shaped and sized to allow the dorsal fin to pass through and possibly to support the dorsal fin when it reaches a cutting position where the cutting blades engage the fish. Additionally, Fig. 4 illustrates that the machine, for each of the first and second cutting devices, comprises a blade shield 50 arranged to shield a sector of a circumference of the corresponding blade, in the illustrated embodiment the sector is approximately 90 degrees of the 360 degrees circumference of the circular knife.

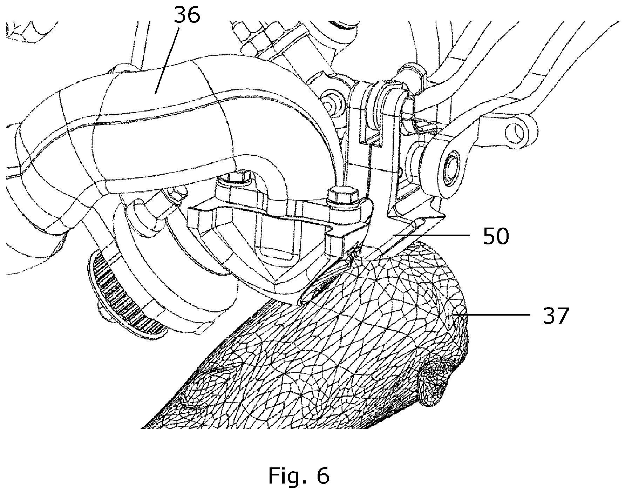

Fig. 6 illustrates further details in the form of the suction hose 36 which is arranged directly adjacent the blade shield 50. The fin is sucked out of the slot 51 once it is cut off from the fish 37.

### LIST OF EMBODIMENTS

1. A machine (1) for removing a dorsal fin of a fish, the machine comprising:
   - a conveying system (2) configured to convey a sequence of fish (3) in a downstream direction (4) while each fish of the sequence of fish is oriented with right and left sides of the fish on opposite sides of a vertical centre plane,
   - a cutter tool (5), and
   - at least one mechanical height control for controlling a height of the cutting tool relative to the conveying system, the mechanical height control comprising a frame (9) carrying the cutting tool and a ski (10),
   wherein the ski is arranged to ride on the dorsal part of the fish while the frame is moving in a hight adjustment plane based on the riding of the ski on the dorsal part of the fish, and wherein the frame is movable by a motion control between an upper and a lower position relative to the ski based on a position signal representing a position of a fish in the sequence of fish relative to the cutting tool.
2. The machine according to embodiment 1, wherein the conveying system (2) is configured to convey the sequence of fish while each fish of the sequence of fish is oriented with the dorsal side of the fish (37) facing in an upwards direction.
3. The machine according to embodiment 1 or 2, comprising a sensor (13) arranged upstream the mechanical height control and configured for determining the position signal.
4. The machine according to any of the preceding embodiments, wherein the frame (9) forms a first pivot structure (11) allowing pivoting of the frame (9) relative to the conveying system.
5. The machine according to any of the preceding embodiments, wherein the frame (9) defines a second pivot structure (12), allowing the ski (10) to pivot relative to the frame.
6. The machine according to embodiment 5, wherein the movement between the upper position and the lower position is constituted by an angular displacement of the ski about the second pivot structure (12).
7. The machine according to embodiment 6, comprising an actuator (20) arranged to cause the angular displacement.
8. The machine according to embodiment 7, wherein the actuator (20) is configured to provide stepwise movement between two end stops.
9. The machine according to embodiment 8, wherein at least one of the two end stops is at an adjustable position.
10. The machine according to embodiment 7, wherein the actuator (20) is configured for movement to selectable positions between the two end stops.
11. The machine according to embodiments 7-10, comprising a controller configured to control the distance between the upper and lower position of the frame relative to the ski based on a fish size signal representing a size of a fish in the sequence of fish.
12. The machine according to any of the preceding embodiments, wherein the cutter tool comprises:
   - a first cutting device (30) arranged on one side of the vertical centre plane and comprising a corresponding blade configured for cutting the fish during rotation of the blade about a first rotation axis (6),
   - a second cutting device (31) arranged on the opposite side of the vertical centre plane and comprising a corresponding blade configured for cutting the fish during rotation of the blade about a second rotation axis (8).
13. The machine according to embodiment 12, wherein the frame (9) carries both the first and the second cutting device (30, 31).
14. The machine according to any of the preceding embodiments, wherein the first and second cutting devices are fixed to each other and moved by the mechanical height control as one unit.
15. The machine according to any of embodiments 12-14, wherein the first and the second cutting device (30,31) are symmetrically arranged relative to the vertical centre plane.
16. The machine according to any of the preceding embodiments, wherein the first cutting device has a fixed angle to the second cutting device.
17. The machine according to any of the preceding embodiments, wherein the first cutting device has a fixed distance to the second cutting device.
18. The machine according to any of the preceding embodiments, comprising for each of the first and second cutting devices, a blade shield (33) arranged to shield a sector of a circumference of the corresponding blade.
19. The machine according to any of the preceding embodiments, comprising a suction hose (36) with an open end arranged at the first and second cutting devices for receiving the dorsal fin by suction.
20. The machine according to embodiment 12, wherein the first and second cutting devices are arranged at cutting positions along a line extending perpendicularly to the vertical centre plane.
21. The machine according to embodiment 20, comprising a dorsal blade shield (50) forming a slot arranged to receive the dorsal fin at the cutting position.
22. The machine according to embodiment 19 and 21, wherein the open end is formed downstream and directly adjacent the dorsal blade shield (50).
23. The machine according to any of the preceding embodiments, wherein the mechanical height control comprises two skies arranged on opposite sides of the vertical centre plane wherein both skies are attached to the frame.
24. The machine according to embodiment 21 and 23, wherein the two skies are on opposite sides of the dorsal blade shield (50).
25. The machine according to embodiment 23-24, comprising a synchronisation structure (32) arranged to synchronise movement of the two skies relative to the frame.
26. A method for removing a dorsal fin of a decapitated fish by use of a machine according to any of the preceding embodiments, wherein the fish is conveyed with right and left sides of the fish on opposite sides of a vertical centre plane, and the cutter tool is moved in the vertical plane by moving the frame between the upper and the lower position relative to the ski.
27. The method according to embodiment 26, wherein the position of front of the fish is detected, and wherein the movement of the frame is initiated at the front of the fish.

## Claims

1. A machine (1) for removing a dorsal fin from a fish, the machine comprising:
- a conveying system (2) configured to convey a sequence of fish (3) in a downstream direction (4) while each fish of the sequence of fish is oriented with right and left sides of the fish on opposite sides of a vertical centre plane,
- a cutter tool (5), and
- at least one mechanical height control for controlling a height of the cutting tool relative to the conveying system, the mechanical height control comprising a frame (9) carrying the cutting tool and a ski (10),
wherein the ski is arranged to ride on the dorsal part of the fish while the frame is moving in a hight adjustment plane based on the riding of the ski on the dorsal part of the fish, and wherein the frame is movable by a motion control between an upper and a lower position relative to the ski based on a position signal representing a position of a fish in the sequence of fish relative to the cutting tool.

2. The machine according to claim 1, wherein the conveying system (2) is configured to convey the sequence of fish while each fish of the sequence of fish is oriented with the dorsal side of the fish (37) facing in an upwards direction.

3. The machine according to claim 1 or 2, comprising a sensor (13) arranged upstream the mechanical height control and configured for determining the position signal.

4. The machine according to any of the preceding claims, wherein the frame (9) forms a first pivot structure (11) allowing pivoting of the frame (9) relative to the conveying system.

5. The machine according to any of the preceding claims, wherein the frame (9) defines a second pivot structure (12), allowing the ski (10) to pivot relative to the frame.

6. The machine according to claim 5, wherein the movement between the upper position and the lower position is constituted by an angular displacement of the ski about the second pivot structure (12).

7. The machine according to claim 6, comprising an actuator (20) arranged to cause the angular displacement.

8. The machine according to claim 7, comprising a controller configured to control the distance between the upper and lower position of the frame relative to the ski based on a fish size signal representing a size of a fish in the sequence of fish.

9. The machine according to any of the preceding claims, wherein the cutter tool comprises:
- a first cutting device (30) arranged on one side of the vertical centre plane and comprising a corresponding blade configured for cutting the fish during rotation of the blade about a first rotation axis (6),
- a second cutting device (31) arranged on the opposite side of the vertical centre plane and comprising a corresponding blade configured for cutting the fish during rotation of the blade about a second rotation axis (8).

10. The machine according to any of the preceding claims, wherein the first and second cutting devices are fixed to each other and moved by the mechanical height control as one unit.

11. The machine according to any of the preceding claims, wherein the first cutting device has a fixed angle to the second cutting device and/or wherein the first cutting device has a fixed distance to the second cutting device.

12. The machine according to any of the preceding claims, comprising for each of the first and second cutting devices, a blade shield (50) arranged to shield a sector of a circumference of the corresponding blade.

13. The machine according to any of the preceding claims, comprising a suction hose suction hose (36) with an open end arranged at the first and second cutting devices for receiving the dorsal fin by suction.

14. A method for removing a dorsal fin of a decapitated fish by use of a machine according to any of the preceding claims, wherein the fish is conveyed with right and left sides of the fish on opposite sides of a vertical centre plane, and the cutter tool is moved in the vertical plane by moving the frame between the upper and the lower position relative to the ski.

15. The method according to claim 26, wherein the position of front of the fish is detected, and wherein the movement of the frame is initiated at the front of the fish.
